# EUROPEAN PATENT SPECIFICATION

(11) **EP 3 661 031 B1**
(45) Date of publication and mention of the grant of the patent: **24.06.2026**
(21) Application number: 19209588.3
(22) Date of filing: 15.11.2019
(51) Int. Cl.: H02K 15/16, H02K 5/06, H02K 5/15, H02K 5/16, H02K 5/173

(54) **MANUFACTURING PROCESS OF AN ELECTRIC MOTOR FOR WASHING MACHINES**
HERSTELLUNGSPROZESS EINES ELEKTROMOTORS FÜR WASCHMASCHINEN
PROCÉDÉ DE FABRICATION D'UN MOTEUR ÉLECTRIQUE POUR MACHINES À LAVER

(30) Priority: 30.11.2018 IT 201800010733
(43) Date of publication of application: 03.06.2020
(73) Proprietor: Nidec Global Appliance Europe S.r.l., 33170 Pordenone (IT)
(72) Inventor: FURLAN, Claudio, 33170 Pordenone (IT); RIGO, Massimo, 33170 Pordenone (IT)
(74) Representative: Modiano, Micaela Nadia

(56) References cited:
- EP-A1- 0 069 309
- DE-A1- 1 943 053
- DE-A1- 102012 100 776
- DE-T2- 69 738 100
- FR-A1- 2 639 160
- FR-A5- 2 118 232
- JP-U- S 642 577
- US-A- 3 313 967
- US-A- 3 714 705
- US-A- 4 796 352
- US-A- 5 287 030

## Description

### TECHNICAL FIELD OF THE INVENTION

. The present invention refers to an improved manufacturing process of a brushless permanent magnet electric motor, which is intended to be used to rotate the drum of a washing machine. The improvement concerns in particular the shields, or caps, wherein the stator and rotor assemblies are enclosed, forming the constructive mechanical structure of the motor.

### STATE OF THE PRIOR ART

. Brushless permanent magnet electric motors for washing machines substantially consist of a stator and a rotor, each of which is made up of a stack of magnetic laminations. The stator is provided with windings that generate the magnetic field, while in the rotor a shaft is inserted that is supported at its ends by respective bearings. The bearings are housed in their respective shields, or caps, which completely enclose the motor.

. The shields are generally obtained by die-casting in aluminum alloy. Subsequently, both shields are machined by chip removal in some of their parts to produce surfaces and references with adequate tolerances to ensure the necessary precision in assembly. In effect, when the motor is finished, the precision of the coupling and the perfect operation of the components must be guaranteed. Normally, the parts of the shields that are machined are: the housing seats of the bearings, the support base of the stator, and the reference surfaces for centering the stator on the motor axis. The motor may be mounted manually, semi-automatically or automatically. The process involves: the assembly of the two shields, front and rear, with the stator; the insertion of the rotor, already pre-assembled, balanced and pre-magnetized; the tightening of the rotor assembly and the stator assembly by means of screws.

. FR2639160A1, DE69738100T2 and US3313967A relate to electric motors according to the prior art.

### PROBLEMS TO BE RESOLVED

. The assembly operation of the motor, when carried out manually, requires a great deal of manual skill on the part of the operator, especially in the case of a BPM (brushless permanent magnet) motor, with pre-magnetized rotor, wherein the rotor attracting the stator tends naturally to misalign the components.

. When, on the other hand, the assembly operation is carried out automatically, as is increasingly the case, a specific machine is used, which aligns the various components, front shield, stator assembly, rotor assembly, and rear shield.
Also in this case, however, the alignment that is obtained may not be optimal, because at least one of the two shields is positioned in the machine in reference to the outer surface of the shield, which cannot offer precise abutment zones, being a rough product of die-casting.

. Consequently, clearances in the assembly stations and coupling tolerances which are large enough to compensate for the inevitable imprecision of the alignments must be provided. This increase in clearances and tolerances clearly translates into greater variability and dispersion of the functional characteristics of the motor, in terms of both performance and noise.
The resulting problems are particularly annoying when the motor is applied to a domestic washing machine. In effect, the user must accept an increase in electrical consumption and, above all, in noise, since modern washing machines tend to continuously increase in speed of rotation of the drum in the spin cycle.

### SUMMARY OF THE INVENTION

. The present invention proposes the object of overcoming the aforementioned problems by obtaining on the outer surface of at least one of the two shields of the motor an abutment zone that is precision machined so as to allow it to be taken as an exact reference for the positioning and centering of the components in the assembly process of the motor.

. The most suitable outer surface to meet the needs of the required machining is the outer ring of the bearing housing. In effect, this surface is easily accessible and workable with common machine tools, without requiring tools or work cycles significantly different from the traditional ones. Moreover, this surface does not require any significant changes in the design of the rough shield and in the manufacture of the die-casting molds. Finally, the bearing zone is one of the few "invariants" available, being the same for all motor configurations.

. The predefined object is achieved by a manufacturing process according to the invention, the technical characteristics of which are defined in the claims of the present patent.

### BRIEF DESCRIPTION OF THE FIGURES

. The characteristics and advantages of the motor, obtained by the manufacturing process according to the present invention, will become more evident in the following description given by way of nonlimiting example with reference to the accompanying figures wherein:
- Fig. 1 is a sectional view showing a BPM (brushless permanent magnet) motor for a washing machine, according to the invention;
- Fig. 2 is an exploded view of the motor of Fig. 1, during the assembly stage;
- Fig. 3 is a perspective view from within one of the shields of the motor of Fig.1,
- Fig. 4 is a perspective view from the outside of the shield of Fig. 3.

### DETAILED DESCRIPTION OF THE INVENTION

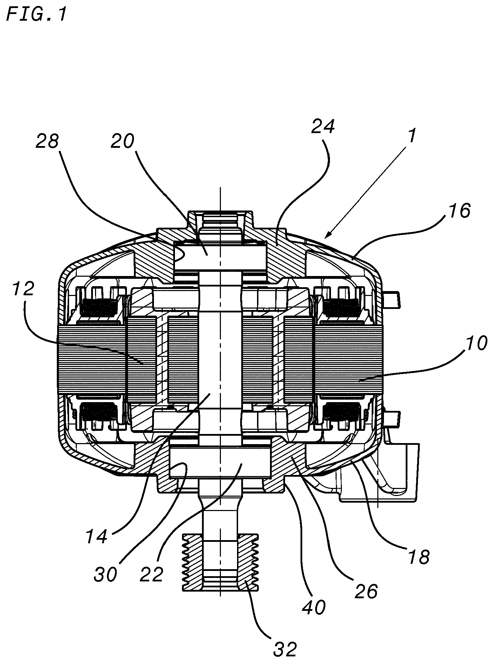

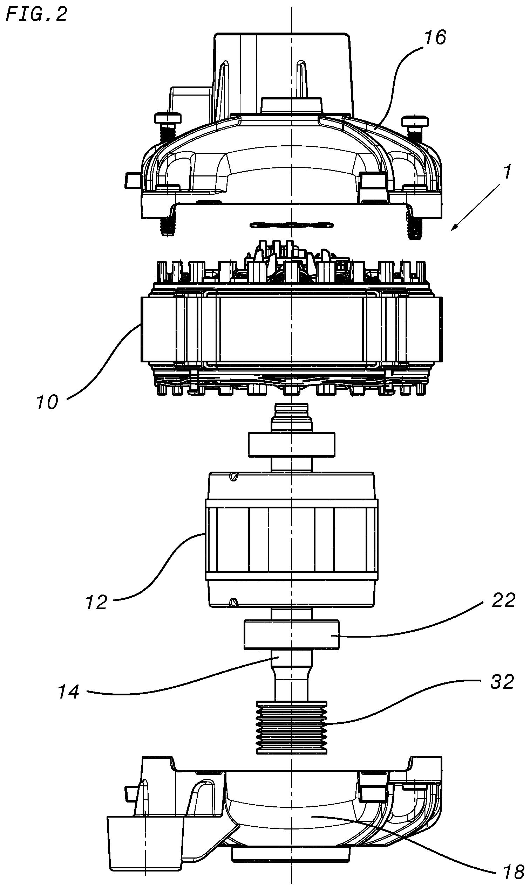

. As may be seen in Fig. 1, a BPM motor 1 is substantially composed of: a stator 10; in which a rotor 12 is inserted, provided with a shaft 14 that penetrates it axially; a first shield 16, mounted on one end of the shaft 14; and a second shield 18, mounted on the opposite end of the shaft 14. Fig. 2 shows the motor (1) in exploded view in the assembly stage, arranged with the axis of rotation in the vertical direction and with the shields open, i.e. apart from each other.
The stator 10 is made up of a stack of magnetic laminations, and is equipped with windings (not shown) that generate the variable magnetic field. The rotor 12 is supported by the shaft 14 by means of a first bearing 20 and a second bearing 22, housed in their respective shields 16 and 18.

. The shield 16 is provided centrally with a ring 24 provided with an axial opening through which one end of the shaft 14 passes. Similarly, the shield 18 is provided with a ring 26 provided with an axial opening through which the other end of the shaft 14 passes.

. The ring 24 extends inside the shield 16 to form a seat 28 in which the first bearing 20 is housed. The machining accuracy of the inner surface of the seat 28 of the bearing 20 is sufficient to ensure the correct axial alignment between the shield 16 and the axis of the rotor 12.
Similarly, the ring 26 extends inside the shield 18 to form a seat 30 in which the second bearing 22 is housed. The shaft 14, when the motor 1 is assembled, extends outside the shield 18 to support a pulley 32, on which a belt (not shown) runs that transmits the rotation to the drum of the washing machine (not shown) for which the motor is used according to the invention.

. A first alternative of the present invention is represented in that an outer cylindrical surface 40 of the seat 30 of the bearing 22 housed in the shield 18, at the end of the shaft 14 that supports the pulley, is subjected to precision machining, such as turning, milling or the like, in order to be able to carry out the function of centering the components of the motor. This machining is particularly advantageous when it is carried out simultaneously with the machining of the inner surface of the seat 30 of the bearing 20. In effect, performing these processes simultaneously ensures the concentricity of the outer cylindrical surface 40 with the seat 30 of the bearing.

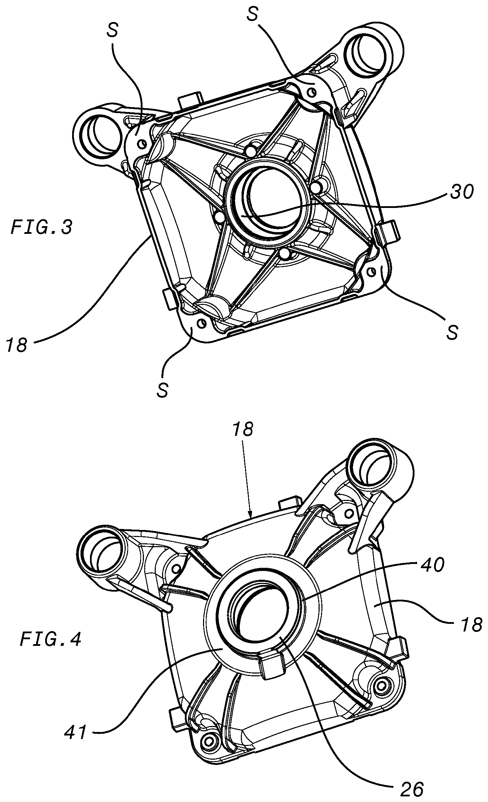

. Fig. 3 is a perspective view from the inside of the shield 18 of the motor 1 according to the invention. As may be noted, the shield 18 has a preferably square shape and it is recalled that, normally, the inner surface of the seat 30 of the bearing 22 is bored with a preferably circular section. The square shape of shield 18 allows one to obtain at the four corners of the shield the same number of support and closure surfaces S of the stator.

. Fig. 4 is a perspective view from the outside of the shield 18 of the motor according to the invention. As may be seen, also the shield 18 has a preferably square shape and is substantially analogous to the shield 16. As mentioned previously, the shield 18 is provided with a ring 26, formed by an axial opening, through which one end of the shaft 14 passes. According to a first alternative of the present invention, the cylindrical outer surface 40 of the ring 26, which projects out of the shield 18, is subjected to precision machining, such as turning, milling or the like.
This surface 40 is easily accessible and workable with common machine tools, without requiring tools or work cycles significantly different from the traditional ones. Moreover, this surface does not require any significant changes in the design of the rough shield and in the manufacture of the die-casting molds. Finally, the bearing zone is one of the few "invariants" available, being the same for all motor configurations.

. Naturally, other surfaces could also, in principle, be used to achieve precise control of the relative angular position between the shield and stator. For example, one could for this purpose machine the "guard" surface 41 (Fig. 4), that is to say the annular surface of the shield 18 that externally surrounds the ring 26. According to a second alternative of the invention, the outer surface which is mechanically machined is the surface 41 of the outer molding impression on the shield.
If one wishes to obtain an even more precise result, one could machine both surfaces 40 and 41, so as to ensure the centering of the shield with respect to two of its geometric axes orthogonal to each other.

. The manufacturing process of the electric motor 1 comprises the steps of: assembling the stator 10 assembly consisting of a stack of magnetic laminations and provided with windings that generate a magnetic field; assembling the rotor 12 assembly in which the driving shaft 14 is inserted and which rotates axially inside the stator and the bearings 20 and 22; inserting vertically the first and the second shield 16, 18, obtained by die-casting in aluminum, in the respective bearings opposite to the two ends of the driving shaft, so as to enclose between them the stator assembly 10 and the rotor assembly 12; aligning and centering of the rotor axis with the stator axis by means of a device with self-centering jaws (known per se and not shown).

**.** According to the invention, at least one of the first shield and the second shield 16, 18 is mechanically machined first, by milling, turning or the like, on at least one outer surface 40 thereof to create a precise reference zone so as to allow the same shield to be centered with reference to at least one of the geometric axes thereof. According to a first alternative of the invention, said previously machined outer surface 40 of said one of the first and second shield is the cylindrical outer surface of the bearing seat, projecting axially out of the shield.

**.** According to a second alternative of the invention, said previously machined surface is the surface 41 of the molding impression on the outer surface of the shield.
Advantageously, the prior machining of the outer reference surface is carried out simultaneously with the boring of the bearing seat in the respective shield.

**.** Experimentally, it was found that the solution described, according to the invention, allows the misalignment of the motor components to be reduced to about 0.07 mm, i.e., almost 1/3 of the misalignment of components in a traditional motor, which is about 0.20 mm.
This misalignment has a corresponding effect on the expected variation of the air gap (between rotor and stator) and therefore on the noise level of the motor, thus resolving the stated problem.

## Claims

1. A manufacturing process of an electric motor (1) comprising a stator assembly (10), a rotor assembly (12) in which a driving shaft (14) extending along a longitudinal axis is inserted and which rotates axially inside the stator (10), a first shield (16) which supports one end of the driving shaft (14), by means of a first bearing (20), and a second shield (18) which supports the other end of the driving shaft (14) by means of a second bearing (22), the process comprising the following steps:
- assembly of the stator assembly (10) formed by a stack of magnetic laminations and provided with windings that generate a magnetic field;
- assembly of the rotor assembly (12) in which the driving shaft (14) is inserted and which rotates axially inside the stator (10);
- obtaining the first and the second shield by die-casting in aluminum alloy;
- insertion of the first shield (16) and of the second shield (18) on the respective opposite ends of the driving shaft (14) provided with respective bearings (20, 22), so as to enclose together the stator assembly (10) and the rotor assembly (12),
**characterized in that** it comprises the steps of:
- after the die-casting, mechanically machining, by milling, turning or the like, an outer surface (40, 41) of at least one of the first shield and the second shield (16, 18) to create a reference zone;
- taking said reference zone as reference for positioning and centering the at least one shield with reference to at least the longitudinal axis of the driving shaft (14);
wherein said outer surface (40, 41) which is mechanically machined, is the cylindrical outer surface (40) of the bearing seat, projecting axially out of the shield
and/or
the surface (41) of the outer molding impression on said shield.

2. A manufacturing process of an electric motor (1) according to claim 1, wherein the prior machining of said outer surface is carried out simultaneously with the boring of the bearing seat in the respective shield.

## Patentansprüche

1. Ein Herstellungsverfahren für einen Elektromotor (1), der Folgendes umfasst: einen Statoraufbau (10); einen Rotoraufbau (12), in den eine Antriebswelle (14), die sich entlang einer Längsachse erstreckt, eingeführt ist und der sich axial in dem Stator (10) dreht; eine erste Abschirmung (16), die ein Ende der Antriebswelle (14) mit Hilfe einer ersten Lagerung (20) trägt, und eine zweite Abschirmung (18), die das andere Ende der Antriebswelle (14) mit Hilfe einer zweiten Lagerung (22) trägt, wobei das Verfahren folgende Schritte umfasst:
- Zusammenbau des Statoraufbaus (10), der aus einem Stapel magnetischer Lamellen besteht und mit Wicklungen ausgestattet ist, die ein Magnetfeld erzeugen;
- Zusammenbau des Rotoraufbaus (12), in den die Antriebswelle (14) eingeführt wird und der sich axial im Stator (10) dreht;
- Herstellen der ersten und zweiten Abschirmung durch Druckgießen einer Aluminiumlegierung;
- Einführen der ersten Abschirmung (16) und der zweiten Abschirmung (18) an den jeweiligen gegenüberliegenden Enden der Antriebswelle (14), die mit entsprechenden Lagern (20, 22) versehen sind, um den Statoraufbau (10) und den Rotoraufbau (12) gemeinsam einzuschließen, **dadurch gekennzeichnet, dass** es folgende Schritte umfasst:
- nach dem Druckgießen, das mechanische Bearbeiten, durch Fräsen, Drehen oder dergleichen, einer äußeren Oberfläche (40, 41) der ersten und/oder der zweiten Abschirmung (16, 18), um eine Referenzzone herzustellen;
- das Nehmen der Referenzzone als Referenz zum Positionieren und Zentrieren der mindestens einen Abschirmung mit Bezug auf mindestens die Längsachse der Antriebswelle (14);
wobei die äußere Oberfläche (40, 41), die mechanisch bearbeitet wird, die zylindrische äußere Oberfläche (40) des Lagersitzes ist, die axial aus der Abschirmung vorsteht, und/oder
die Oberfläche (41) des äußeren Formabdrucks an der Abschirmung.

2. Ein Herstellungsverfahren für einen Elektromotor (1) gemäß Anspruch 1, worin die vorhergehende Bearbeitung der äußeren Oberfläche gleichzeitig mit dem Bohren des Lagersitzes in der jeweiligen Abschirmung durchgeführt wird.

## Revendications

1. Procédé de fabrication d'un moteur électrique (1) comprenant un ensemble stator (10), un ensemble rotor (12) dans lequel est inséré un arbre d'entraînement (14) s'étendant le long d'un axe longitudinal et qui tourne axialement à l'intérieur du stator (10), un premier flasque (16) qui supporte une extrémité de l'arbre d'entraînement (14), au moyen d'un premier palier (20), et un deuxième flasque (18) qui supporte l'autre extrémité de l'arbre d'entraînement (14) au moyen d'un deuxième palier (22), le procédé comprenant les étapes suivantes :
- assemblage de l'ensemble stator (10) formé d'un empilement de tôles magnétiques et muni d'enroulements générant un champ magnétique ;
- assemblage de l'ensemble rotor (12) dans lequel l'arbre d'entraînement (14) est inséré et qui tourne axialement à l'intérieur du stator (10) ;
- obtention des premier et deuxième flasques par moulage sous pression en alliage d'aluminium ;
- insertion du premier flasque (16) et du deuxième flasque (18) sur les extrémités opposées respectives de l'arbre d'entraînement (14) muni de paliers respectifs (20, 22), de manière à enfermer ensemble l'ensemble stator (10) et l'ensemble rotor (12),
**caractérisé en ce qu'**il comprend les étapes suivantes :
- après le moulage sous pression, l'usinage mécanique, par fraisage, tournage ou similaire, d'une surface extérieure (40, 41) d'au moins l'un des premier et deuxième flasques (16, 18) pour créer une zone de référence ;
- utilisation de ladite zone de référence comme référence pour le positionnement et le centrage dudit au moins un flasque par rapport à au moins l'axe longitudinal de l'arbre d'entraînement (14) ;
où ladite surface extérieure (40, 41) qui est usinée mécaniquement est la surface extérieure cylindrique (40) du logement de palier, faisant saillie axialement hors du flasque et/ou
la surface (41) de l'empreinte de moulage extérieure sur ledit flasque.

2. Procédé de fabrication d'un moteur électrique (1) selon la revendication 1, où l'usinage préalable de ladite surface extérieure est effectué simultanément à l'alésage du logement de palier dans le flasque correspondant.
